# EUROPÄISCHE PATENTSCHRIFT

(11) **EP 0 805 128 B1**
(45) Veröffentlichungstag und Bekanntmachung des Hinweises auf die Patenterteilung: **14.04.2004**
(21) Anmeldenummer: 97106295.5
(22) Anmeldetag: 16.04.1997
(51) Int. Cl.: C04B 24/12

(54) **Zementzusatz**
Cement additive
Additif pour ciment

(30) Priorität: 30.04.1996 DE 19617357
(43) Veröffentlichungstag der Anmeldung: 05.11.1997
(73) Patentinhaber: Kaspar, Heinrich Otto Paul, Dr., Pietermaritzburg 3201 (ZA); Kaspar, Hanno Rolf Erich, 79189 Bad Krozingen (DE)
(72) Erfinder: Kaspar, Heinrich Otto Paul, Dr., Pietermaritzburg 3201 (ZA); Kaspar, Hanno Rolf Erich, 79189 Bad Krozingen (DE)
(74) Vertreter: Berg, Wilhelm, Dr.

(56) Entgegenhaltungen:
- EP-A- 0 519 747
- EP-A- 0 555 090
- EP-A- 0 579 538
- GB-A- 458 266
- GB-A- 1 151 604
- US-A- 2 320 009
- US-A- 2 752 260
- US-A- 5 232 497
- CHEMICAL ABSTRACTS, vol. 96, no. 16, 19.April 1982 Columbus, Ohio, US; abstract no. 128535c, DIBROV ET AL.: "formation of concrete structure in the presence of 2-imidazoline hydrochloride additives under heat- and wet treatments" XP002044819 & DIBROV ET AL: DOPOV. AKAD. NAUK UKR. RSR, SER. A: FIZ.-MAT. TEKH. NAUKI, Bd. 12, 1981, Seiten 77-80,
- CHEMICAL ABSTRACTS, vol. 106, no. 20, 18.Mai 1987 Columbus, Ohio, US; abstract no. 161683x, TURKINOV ET AL.: "concrete mix" Seite 343; XP002044820 & SU 1 278 330 A (ALL-UNION SCIENTIFIC-RESEARCH INSTITUTE OF THE CEMENT INDUSTRY)

## Beschreibung

Die Erfindung betrifft ein Zementzusatzmittel mit einem Gehalt an organischen Stickstoffverbindungen, insbesondere zur Erhöhung der Druckfestigkeit zementhaltiger Formkörper.

Zemente in dem hier gebrauchten Sinne sind feinteilige Materialien mit hydraulischen Eigenschaften, ausschließlich oder überwiegend auf anorganischer Grundlage, die leicht verformbare bzw. fileßfähige, gegebenenfalls nach Verformung, mit Wasser mehr oder weniger schnell erhärtbare Massen bilden. Sie werden meist als hydraulische Zemente bezeichnet oder auch als hydraulische Bindemittel, wegen ihrer ganz vorrangigen Bedeutung nach Zugabe von Wasser zusammen mit Sand härtbare Mörtel oder nach Zugabe von Sand und gröberen mineralischen Bestandteilen. wie beispielsweise Kies, Beton zu bilden. Die hydraulischen Zemente können dabei aus einem wasserhärtbaren Zement nur einer einzigen Art oder Herkunft, wie beispielsweise Portlandzement oderAluminatzement gebildet sein, aber auch wasserhärtbare Zemente unterschiedlicher Art, also Gemische verschiedener, wasserhärtbarer Zemente sein. Auf diese Weise lassen sich die Eigenschaften des Zements in unterschiedlicher Weise modifizieren, beispielsweise im Sinne eines erhöhten Widerstandes gegen Salzwasser und gegenüber Alkali, der Verbesserung des Fließverhaltens,der Einstellung größerer Dichte, des Setzverhaltens und dergleichen. Ganz bekannt sind hydraulische Zemente, die beispielsweise neben Portlandzement andere wasserhärtbare Zemente bzw. Bestandteile, wie Hochofenschlacke, Flugasche und Gips enthalten. Selbst Kalksteinzuschläge als Zementbestandteile sind bekannt, obwohl im streng klassischen Sinne Kalkstein kein hydraulisch härtendes Material ist. In der Praxis können die hydraulischen Zemente, unabhängig davon, ob sie wasserhärtbare Zemente einer oder mehrerer Art enthalten, noch geringe Mengen an Mahlhilfsmittel bzw. das Setzverhalten, Fließverhalten, die Dichte bzw. Porenvolumen, die Druckfestigkeit, die Härtungscharakteristik und dergleichen Eigenschaften modifizierende Zusätze aufweisen. Gerade bei hydraulischen Zementen. die, gleichgültig aus welchen Gründen, merkliche Anteile an Bestandteilen wie Hochofenschlacke oder Flugasche enthalten. lassen sich damit gegebenenfalls einhergehende Eigenschaftsänderungen beeinflussen bzw. modifizieren.

Eine besonders wichtige, häufig für die Brauchbarkeit eines Zements entscheidende Eigenschaft ist die Härtungscharakteristik. Erwünscht ist hohe Druckfestigkeit, jedoch nicht erst nach 7 oder 28 Tagen, sondern schon eine hohe 1-Tag- Druckfestigkeit. Dies ist von außerordentlich wirtschaftlicher und technischer Bedeutung, schon deswegen, weil eine hohe 1-Tag- Druckfestigkeit eine frühzeitige Entfernung und Weiterverwendung der Schalungen und Formen bzw. eine frühzeitige Belastung der Formteile und dergleichen ermöglicht. Wegen ihrer außerordentlichen Bedeutung ist die Härtungscharakteristik Gegenstand einer Vielzahl wissenschaftlicher Untersuchungen, wobei als Modellsubstanz wegen seiner wirtschaftlichen und technischen Dominanz regelmäßig Portlandzement herangezogen wird. Einigkeit scheint in der Fachwelt dahingehend zu bestehen, daß die Zementbestandteile C₃A (Tricalciumaluminat) und C₄AF (Tetracalciumaluminoferrit), also die Aluminiumphasen für die Hydratation und das Setzverhalten des Zements maßgeblich sind, während die Silikatphasen C₃S (Tricalciumsilikat) und C₂S (Dicalciumsilikat) von Bedeutung für die Entwicklung der Festigkeit sind. Es ist bekannt, daß Triethanolamin, offenbar in teils ungeklärter Abhängigkeit von der Konzentration sowohl ein Härtungsbeschleuniger als auch ein Härtungsverzögerer sein kann, daß es die C₃A-Hydratbildung beschleunigt, andererseits die C₃S -Hydratisierung bzw. den Start der Hydratisierung verzögert (Cement Admixtures: uses and applications, edited by Professor P.C. Hewlett on behalf of the Cement Admixture Association, second edition 1988, Longman, Essex ISBN 0-582-02099-9). Triethanolamin soll die Reaktion zwischen Gips und C₃A unter Bildung von Ettringit beschleunigen, während andere Autoren davon ausgehen, daß über Gelatbildung der C₄AF-Phase Wirkungen wie C₃A zukommen mit erhöhter Ettringit-Bildung und früher Festigkeit. Die C3S-Verzögerung aber bleibt unverstanden (Concrete Admixtures. V.H. Dodson, Ph.D., Van Nostrand and Reinhold, New York 1990, ISBN 0-442-00149-5).

Wiederholt wurden Aminzusätze, namentlich Zusätze von Triethanolamin in Form der Salze mit Arylhydroxy-Verbindungen, mit aliphatischen oder aromatischen Carbonsäuren als Mahlhilfsmittel empfohlen (SA-PS 665 009, 672 753 und 822 399). Hierzu gehören auch Trialkanolamin-Zusätze, beschränkt auf solche mit mindestens einer C₃-C₅-Hydroxyalkylgruppe, gegebenenfalls auch in Form der Salze mit organischen Säuren als Nitrate, Sulfate und Ester zur Erhöhung der 7 und 28-Tage-Druckfestigkeit (SA-PS 907 720). Allerdings ist dies auf Gemische von Klinker mit Gips und mindestens 4 % C₄AF beschränkt.

Die beschleunigende Wirkung des CaCl₂ auf die Härtung von hydraulischen Zementen ist unbestritten. Hierzu muß es in Mengen von 0,5 - ca. 3 Gew.-% eingesetzt werden. So unstreitig diese Wirkung ist, so umstritten und ungeklärt ist der Wirkungsmechanismus, damit die gezielte Steuerung nach Ursache und Wirkung. Zwar zeigen Messungen an isoliertem C₃S, der Zementhauptphase und an C₃A einen schnellen Reaktionsablauf und Hydratisierung mit CaCl₂. In Portlandzement in Anwesenheit der anderen Stoffe, namentlich in Anwesenheit von Calciumsulfat, nimmt diese Reaktion einen bislang jedoch ungeklärten und nicht verständlichen Verlauf. Der Mechanismus der C₃S-Beschleunigung ist weiter ungeklärt. Spekulative Erörterungen konkurrierender Reaktionen unter Bildung von Ettringit und Chloraluminaten und der Wirkung des Calciumsulfats lassen keine Klärung zu und beantworten insbesondere nicht die Frage, warum eine 20 - 30-fache Chloridmenge zur Erzielung einer nennenswerten Beschleunigung erforderlich ist. Gerade aber das neben dem minimalen gebundenen Teil verbleibende sogenannte freie Chlorid, das im Beton beweglich und sogar auswaschbar ist, ist Ursache der schweren Korrosionsschäden, insbesondere bei einer Carbonisierung des gealterten Betons. Der mit Calciumchlorid erzielten Beschleunigung steht so das massive Korrosionsverhalten der gehärteten Erzeugnisse entgegen, was insbesondere für eisenarmierten Beton und für alle jene Fälle gilt, wo der Beton bzw. Mörtel mit Stahl oder anderen korrosionsgefährdeten Materialien in Kontakt gerät. Die europäische Standard-Norm für Zement EN 413-1, mit der der zulässige Chloridgehalt auf höchstens 0,1 % Gew.-% beschränkt wird, steht einer Verwendung von Calciumchlorid als Härtungsbeschleuniger weitgehend entgegen. Dies gilt um so mehr, wenn man berücksichtigt, daß beispielsweise Portlandzement selbst schon einen Chloridgehalt bis zu ca. 100 ppm, Flugasche und Hochofenschlacke von jeweils ca. 100 - 200 ppm. Kalkstein ca. 200 - 300 ppm und selbst Anmachwasser in der Größenordnung von etwa 100 ppm Chlorid aufweisen.

Die Aufgabe, einen hydraulischen Zement zur Verfügung zu stellen, der zuverlässig so härtbar ist, daß er den Vorteil einer hohen 1-Tag-Druckfestigkeit aufweist und 7- und 28-Tage-Druckfestigkeitswerte demgegenüber nicht abfallen, sondern allenfalls noch leicht ansteigt, der normgerecht ist und frei ist von dem bekannten erheblichen Korrosionsverhalten, ist durch den Stand der Technik befriedigend nicht gelöst. Überraschenderweise wurde nunmehr gefunden, daß bestimmte Salze der organischen Amine und Alkali- und/oder Erdalkalisalze eine besonders vorteilhafte Wirkung auf die Härtungscharakteristik hydraulischer Zemente ausüben. Gegenstand der Erfindung ist demgemäß ein Zement-Zusatzmittel, das ein Chlorid- und/oder Bromidsalz eines zur Ammoniumsalz-Bildung befähigten, organischen Amins und Alkali-, Erdalkali- und/oder Ammoniumchloride enthält. Besonders geeignet sind wasserlösliche Verbindungen. Besonders bevorzugt sind weiter die Salze der genannten Halogenide mit schwach-basischen organischen Aminen. Hierzu gehören organische Amine mit einem K-Wert von 10⁻⁴ bis 10⁻¹⁰, insbesondere von 10⁻⁵ bis 10⁻⁸. Geeignet sind gesättigt als auch ungesättigt aliphatische, aromatische und/oder heterocyclische Amine mit mindestens einem oder auch mehr Aminstickstoffen, wobei die organischen Amine gegebenenfalls in bekannter Weise, z. B. OHsubstituiert sein können. Die der Chlorid- und/oder Bromidbildung unterworfenen organischen Amine sollten nicht toxisch sein und können primäre, sekundäre, tertiäre und/oder quaternäre Stickstoffatome enthalten. Ausgeschlossen sind nur Amin-Salze merklicher Toxizität, so sich der Verdacht der Toxizität bestätigen sollte. Beispiele geeigneter Amine sind Mono-, Di- und/oderTrialkylamine, insbesondere mit gleichen oder verschiedenen, gegebenenfalls substituierten C₁-C₆-Alkyl- oder Hydroxyalkylgruppen, aromatische Amine, insbesondere Anilin. Toluidine, Aminonaphthene, Aminophenanthrene, Aminoanthrazene, Aminobenzanthrazene, Aminofluorene, Aminohydrindene einschließlich ihrer gegebenenfalls mehrere Aminogruppen enthaltenden und/oder N-niedr.-Alkyl-substituierten und/oder ganz oder teilgesättigten Derivate, heterocyclische, Ringstickstoffe enthaltende Verbindungen (einschließlich ihrer gegebenenfalls weitere Aminogruppen enthaltenden Verbindungen) wie Pyrrol, Pyrrolidine, Chinoline, Acridine, Carbazole, Pyridine, Pyrimidine, Phenazine, Imidazole, Indazole, Pyrazole, Indole, Triazole, Thiazole, Benzthiazole sowie deren ganz oder teilgesättigte Derivate, wie Piperidin. Pyrrolidine und/oder substituierten Verbindungen. Die Chloridsalze der organischen Amine sind aus wirtschaftlichen Gründen bevorzugt. Die erfindungsgemäß verwendeten Halogenidsalze können in üblicher Weise durch Umsetzung der Amine mit den Halogenwasserstoffen aber auch durch doppelte Umsetzung z. B. mit Ammonhalogenid hergestellt werden. Bevorzugt sind Aminsalze mit einer vollständigen stöchiometrischen Salzbildung der Amingruppen mit den genannten Halogeniden, wenn auch gewisse Anteile an nicht zur Salzbildung herangezogenen Amingruppen nicht schädlich sind. Von besonderem Vorteil ist, daß die erfindungsgemäßen Zementzusatzmittel Chloride und/oder Bromide von Gemischen organischer Amine enthalten können, was insbesondere für die Verwendung sonst schwer trennbarer Amingemische, wie beispielsweise der schwer trennbaren aliphatischen Amingemische oder Gemischen von Mono-, Di- und Trialkanolaminen z. B. den entsprechenden Ethanolamingemischen von Vorteil ist.

Die erfindungsgemäßen Zementzusatzmittel enthalten neben den Chlorid- und/oder Bromidsalzen der organischen Amine zusätzlich Alkali- und/oder Erdalkalichloride, z. B. NaCl oder Ammoniumchlorid. Die Chloridmenge kann z. B. bis zum 5-fachen, insbesondere entsprechend dem 1-fachen bis 4-fachen der Chlorid- bzw. Bromidmenge der Halogensalze der organischen Amine enthalten sein. Gegenüber der bekannten CaCl₂-Beschleunigung haben derartige Zementzusatzmittel nicht nur den Vorteil, frei zu sein von deren Korrosionswirkung, sondern führen darüber hinaus noch zu einer deutlich verbesserten Kurz- und Langzeit-Druckfestigkeit.

Aus der US-A-5 232 497 ist es zwar bekannt, zur Auskleidung von Bohrlöchern das nachteilige NaCl und KCl durch ein Amin zu ersetzen.

Durch die erfindungsgemäße Verwendung der Chlorid- und/oder Bromidsalze organischer Amine und der Alkali-, Erdalkali- und/oder Ammoniumchloride als Zementzusatzmittel gelingt in Abhängigkeit vom jeweiligen Zement-Typ gegenüber dem Stand der Technik eine Erhöhung der 1-Tag-Druckfestigkeit im Bereich von 20 - 150 %. Von wesentlichem Vorteil ist, daß diese hervorragende Erhöhung der Kurzzeit-Druckfestigkeit nicht mit einer Verschlechterung der Endfestigkeiten erkauft werden muß, sondern im Gegenteil mit einer über dem Standard liegenden End-Druckfestigkeit einhergeht. Ein weiterer, bemerkenswerter Vorteil liegt indessen darin, daß die erfindungsgemäßen Zementzusatzmittel die Härtungscharakteristik von hydraulischen Zementen mit Gehalten von Flugasche, Hochofenschlacken und dergleichen. einschließlich Kalkstein, im angegebenen Sinne in hervorragender Weise beeinflussen. So gelingt die Erreichung hoher 1-Tag-Druckfestigkeiten selbst mit hydraulischen Zementen, die gegenüber Portlandzement sogar überwiegende Anteile an Flugaschen, Hochofenschlacken und/oder Kalkstein enthalten, wenn sie nicht sogar Portlandzement-frei sind. Bevorzugt sind hierbei Gemische mit 5 - 95 Gew.-%, insbesondere 10 - 70 Gew.-% Flugasche, Hochofenschlacke und/oder Kalkstein, insbesondere Gehalte an Flugasche im Bereich von 25 - 60 bzw. an Hochofenschlacken im Bereich von 5 - 15 Gew.-%. Die Kalksteinzuschläge liegen häufig im Bereich von 5 - 15 Gew.-%. Als weiteren Bestandteil enthalten solche Mischzemente als hydraulischen Zement regelmäßig Portlandzement oder ähnliche hydraulische Zemente. Obwohl durch diese Zementbestandteile, ebenso wie durch Portlandzement, ein gewisser Chlorideintrag erfolgt, liegt der Gesamtchloridgehalt bei Verwendung der erfindungsgemäßen Zementzusatzmittel regelmäßig weiter unterhalb des durch EN 413-1 bestimmten maximalen Wertes von 0,1 Gew.- %. Dies ist auch dadurch ermöglicht, daß die erfindungsgemäßen Zementzusatzmittel ihre, die Druckfestigkeit deutlich verbessernde Wirkung schon bei geringen Zusatzmengen voll umfänglich ausüben. Selbst bei Zusatzmengen in Höhe von 0,2 Gew-%, bezogen auf die jeweilige hydraulische Zementmasse, können die europäischen Normwerte nicht überschritten werden. Im allgemeinen werden aber Zusätze in einer Menge von 0,1 Gew.-%, bezogen auf das hydraulische Zementgewicht, nicht überschritten. Vielmehr genügen meist geringere Mengen, zumal eine Überdosierung keine dies rechtfertigende Vorteile bringt. Die Dosierungen liegen vorzugsweise in tieferen Bereichen, so z.B. in Bereichen von 0,01 - 0,09 Gew.-%, insbesondere zwischen 0,04 und 0,08 Gew.-%.

Im Rahmen der Erfindung durchgeführte Untersuchungen weisen daraufhin, daß die erfindungsgemäß als Zementzusatzmittel eingesetzten Chlorid- und/oder Bromidsalze der organischen Amine zusätzlich offenbar synergistisch mit den über die hydraulischen Zementbestandteile eingeschleppten Chloriden zusammenwirken. Gegenüber der bekannten, beispielsweise mit Calciumchlorid erzielbaren Härtungsbeschleunigung mit der damit einhergehenden inakzeptablen Korrosion durch die freien Chloride, werden auf dem hier beanspruchten Weg durch das Zusammenwirken der erfindungsgemäßen Zementzusatzmittel mit den ohnehin vorhandenen, durch die hydraulischen Zemente selbst zur Verfügung gestellten Chloriden erhöhte Kurzzeit-Druckfestigkeiten und Endfestigkeiten erzielt, ohne die sonst unabänderlichen Korrosionen hinnehmen zu müssen, zudem noch unter Einhaltung der europäischen Normen. Innerhalb dieses Bereiches können die in den hydraulischen Zementen enthaltenen Chloride ein Mehrfaches, z. B. bis zum 3- bis 4-fachen der mit den Chlorid- und/oder Bromidsalzen der organischen Amine eingeführten Halogenidmenge ausmachen. So sind innerhalb der genannten europäischen Norm hydraulische Zemente zugänglich, die neben der erfindungsgemäß als Zementzusatzmittel enthaltenen Chlorid- und/oder Bromidsalzen der organischen Amine weiter Alkali- und/oder Erdalkalichloride, wie beispielsweise NaCl oder auch Ammoniumchlorid, enthalten, entsprechend einer Chloridmenge, die beispielsweise das 1-fache bis zum 4-fachen der mit dem Chloridsalz bzw. Bromidsalz des organischen Amins eingeführten molaren Halogenmenge ausmacht.

Die erfindungsgemäßen Zementzusatzmittel können neben den Chlorid- und/oder Bromidsalzen der organischen Amine und neben den Alkali-, Erdalkali- oder Ammoniumchloriden bekannte Zusatzmittel, wie flüssige oder feste Träger, Luftporenbildner, Dichtungsmittel, Mahlhilfsmittel, Dispergiermittel, wie Attapulgit oder dolomitische oder calcinitische Carbonate, Halogenspender, z. B. Fluorsilikate, wie Magnesiumfluorsilikat, Lignosulfonate, wie Calciumlignosulfonate, als Verflüssiger, Stabilisatoren, wie Harnstoff, Faserzusätze, bevorzugt alkalibeständige Glasfasern und dergleichen, enthalten.

Gegenstand der Erfindung sind weiter hydraulische Zemente enthaltend Chlorid- und/oder Bromidsalze organischer, zur Ammoniumsalz-Bildung befähigter Amine und Alkali-, Erdalkali- und/oder Ammoniumchloride. Als Zemente können dabei insbesondere Portlandzement und andere hydraulische Zemente, wie Hochofenschlacke, Flugasche, Gips und Mischungen daraus enthaltende, gegebenenfalls noch weitere Zusätze, wie Kalkstein und dergleichen, aufweisende feinteilige Materialien, z. B. Portlandzement selbst oder 5- 95 Gew.-% Hochofenschlacke, Flugasche und Kalkstein aufweisende Mischungen mit Portlandzement verwendet werden. Die Chlorid- und/oder Bromidsalze der organischen Amine werden entsprechend den zuvor genannten Mengen meist in Mengen von bis zu 0.1 Gew.-%, bezogen auf den Zementgehalt, zugesetzt. Geeignet sind die zuvor definierten Amine bzw. deren Halogenidsalze, insbesondere wasserlösliche Aminsalze, zumindest derart, daß die eingesetzten Chlorid- und/oder Bromidsalze der organischen Amine in der als Anmachwasser eingesetzten Wassermenge löslich sind. Weiter bevorzugt sind die genannten Halogenide schwach basischer organischer Amine. Die zur Salzbildung verwendeten Amine können primär, sekundär, tertiär und/oder quaternär, gesättigt oder ungesättigt, aliphatische, aromatische und/oder heterocyclische oder Amingemische sein. Gleichzeitig oder aufeinanderfolgend können mit den erfindungsgemäßen Aminen, unbeachtlich einer in situ Bildung, Ammoniumchlorid. Alkali- und/oder Erdalkalichlorid in einer Chloridmenge bis zum 5-fachen der molaren Chlorid- und/oder Bromidmenge der Halogenidsalze der organischen Amine zugesetzt werden. Die EN 431-1 ist dabei gewahrt.

Die nachfolgenden Beispiele dienen der Erläuterung der Erfindung. 100 Teile Pyrrolidin werden mit 100 Teilen Ammoniumchlorid und 10 Teilen Wasser unter leichter Erwärmung (maximum 60 Grad Celsius) für 6 Stunden umgesetzt. Nach 24 Stunden Lagerzeit wird mit 40%iger Ameisensäure neutralisiert. Weiterwerden 100 Teile Ammoniumchlorid, 5 Teile Lignosulfonat, 85 Teile Harnstoff und 600 Teile Natriumchlorid zugegeben. Insgesamt 1000 Teile. Das Produkt kann direkt als Pulver oder verdünnt als 10%ige Lösung beigesetzt werden.
**A.** Mörtelmischung:

| | |
|---|---|
| 2.3 kg | PC 15, ex Blue Circle - Lichtenberg, enthaltend 15 % Flugasche (0 - 45 micron) ex Kraftwerk Lethaba |
| 0,2 kg | Dolomit ex Kalkwerk Potgietersrust, gemahlen, enthaltend 5 % Attapulgit |
| 0,2 kg | Hochofenschlacke, gemahlen, ex ISCOR - Newcastle |
| 1,3 kg | Flugasche (0 - 45 micron) ex Kraftwerk Lethaba |
| 4,0 kg | Mediumsand, 100 + 0,50 mm, 100 % - 4,00 mm |
| 1,6 kg | Wasser (Wasser/Zement-Wert 0,4) |

Ausbeute 12 Würfel 100 mm Kantenlänge.
**B.** Druckfestigkeit:

| Versuchsreihe | 1 | 2 |
|---|---|---|
| Zementzusatzmittel eingemahlen in Kalkstein | - | 4 g (Beispiel 1) |
| MpA 1 Tag | 3 | 8 |
| " 3 Tage | 9 | 18 |
| " 7 Tage | 25 | 35 |
| " 28 Tage | 34 | 42 |

## Patentansprüche

1. Zementzusatzmittel mit einem Gehalt an organischen Stickstoffverbindungen, **dadurch gekennzeichnet, daß** das Zusatzmittel ein Chlorid- und/oder Bromidsalz eines zur Ammoniumsalzbildung befähigten organischen Amins und ein Alkali-, Erdalkali- und/oder Ammoniumchlorid enthält.

2. Zementzusatzmittel gemäß Patentanspruch 1, **dadurch gekennzeichnet, daß** die Chlorid- und/oder Bromidsalze die Salze eines schwach basischen organischen Amins sind.

3. Zementzusatzmittel gemäß einem der vorhergehenden Patentansprüche, **dadurch gekennzeichnet, daß** die Chlorid- und/oder Bromidsalze die Salze eines aliphatischen, aromatischen und/oder heterocyclischen Amins sind.

4. Zementzusatzmittel gemäß Patentanspruch 3, **dadurch gekennzeichnet, daß** die Chlorid- und/oder Bromidsalze die Salze eines primären, sekundäre, tertiären und/oder quaternären Amins sind.

5. Hydraulische Zemente enthaltend organische Stiekstoffverbindungen, **dadurch gekennzeichnet, daß** sie Chlorid- und/oder Bromidsalze organischer, zur Ammoniumsalz-Bildung befähigter Amine und Alkali-, Erdalkali- und/oder Ammoniumchloride enthalten.

6. Hydraulische Zemente gemäß einem der vorhergehenden Patentansprüche, **dadurch gekennzeichnet, daß** sie das Zementzusatzmittel in Mengen von 0.01 - 0.1 Gew.-%. insbesondere von 0,04 - 0,08 Gew.-%. bezogen auf den hydraulischen Zement, enthalten.

7. Hydraulische Zemente gemäß einem der vorhergehenden Patentansprüche 5 oder 6, **dadurch gekennzeichnet, daß** sie ein Zementgemisch von Portlandzement mit 5 - 95 Gew.-% Hochofenschlacke, Flugasche und/oder Kalkstein enthalten.

## Claims

1. A cement additive containing organic nitrogen compounds **characterised in that** the additive contains an chloride and/or bromide salt of an organic amine which is capable of forming an ammonium salt and alkali, alkali earth and/or ammonium chloride.

2. A cement additive according to claim 1 **characterised in that** the chloride and/or bromide salt is a salt of a weak basic organic amine.

3. A cement additive according to claim 1 or 2 characteerised in that the chloride and/or bromide salt is an aliphatic, aromatic and/or heterocyclic amine.

4. A cement additive according to claim 3 in that the chloride and/or bromide salt is a salt of an primary, secondary, tertiary and/or quaternary amine.

5. Hydraulic cements containing organic nitrogen compounds **characterised in that** they contain chloride and/or bromide salts of organic amines capable of forming ammonium salts and alkali, alkali earth and/or ammonium chloride.

6. Hydraulic cements according to any of the preceeding claims **characterised in that** they contain the cement additive in quantities of 0,01 - 0,1 mass%, preferably 0,04 - 0,08 mass% in relation to the hydraulic cement.

7. Hydraulic cements according to claim 5 or 6 **characterised in that** the portland cement blend contains 5 - 95 % blast furnace slag, flyash and/or limestone.

## Revendications

1. Additif pour ciment comprenant des composés d'azote organiques, **caractérisé en ce que** l'additif comprend un sel de chlorure et/ou de bromure d'une amine organique apte à former un composé de sel d'ammonium et un chlorure alcalin, alcalino-terreux et/ou d'ammonium.

2. Additif pour ciment selon la revendication 1, **caractérisé en ce que** les sels de chlorure et/ou de bromure sont des sels d'une amine organique faiblement basique.

3. Additif pour ciment selon l'une des revendications précédentes, **caractérisé en ce que** les sels de chlorure et/ou de bromure sont des sels d'une amine aliphatique, aromatique et/ou hétérocyclique.

4. Additif pour ciment selon la revendication 3, **caractérisé en ce que** les sels de chlorure et/ou de bromure sont des sels d'une amine primaire, secondaire, tertiaire et/ou quaternaire.

5. Ciments hydrauliques comprenant des composés d'azote organiques, **caractérisés en ce qu'**ils comprennent des sels de chlorure et/ou de bromure d'une amine organique apte à former un composé de sel d'ammonium et un chlorure alcalin, alcalino-terreux et/ou d'ammonium.

6. Ciments hydrauliques selon l'une des revendications précédentes, **caractérisés en ce que** l'additif pour ciment représente une teneur comprise entre 0,01 - 0,1% en poids en particulier entre 0,04 - 0,08 % en poids par rapport au ciment hydraulique.

7. Ciments hydrauliques selon l'une des revendications 5 ou 6, **caractérisés en ce qu'**ils comprennent un mélange de ciment de Portland comprenant 5 - 95% en poids de laitier de haut fourneau, de la cendre volante, et/ou du calcaire.
